# EUROPÄISCHE PATENTANMELDUNG

(11) **EP 3 388 614 A1**
(43) Veröffentlichungstag der Anmeldung: **17.10.2018**
(21) Anmeldenummer: 18163105.2
(22) Anmeldetag: 21.03.2018
(51) Int. Cl.: E06B 9/72, E06B 9/88, H02P 29/60, E06B 9/68

(54) **ROHRMOTOR FÜR EINE VERDUNKELUNGSEINRICHTUNG**

(30) Priorität: 11.04.2017 DE 202017102161 U
(71) Anmelder: ARCA Beteiligungen GmbH, 46414 Rhede (DE)
(72) Erfinder: Hirschfeld, Jörg, 47665 Sonsbeck (DE); Tepasse, Johannes, 46414 Rhede (DE)
(74) Vertreter: Gottschald Patentanwälte Partnerschaft mbB

(57) **Zusammenfassung**

Die Erfindung betrifft einen Rohrmotor für eine Verdunkelungseinrichtung (3), insbesondere Rollladenmotor (1), mit einer Antriebseinheit (13) umfassend einen eine Wicklung (14a) aufweisenden Antriebsmotor (14) und eine Abtriebwelle (5), die vom Antriebsmotor (14) antreibbar ist und mit einer Steuereinheit (17) umfassend einen Microcontroller (19) und einen ersten Temperatursensor (20), der von der Wicklung (14a) des Antriebsmotors (14) beabstandet ist und der konfiguriert ist, die Temperatur am Microcontroller (19) zu erfassen und der erfassten Temperatur entsprechende Sensordaten zu generieren. Es wird vorgeschlagen, dass der Rohrmotor (1) ferner einen zweiten Temperatursensor (26) aufweist, der mit der Steuereinheit (17) verbunden ist und konfiguriert ist, die Temperatur an einer Stelle des Rohrmotors (1) zu erfassen, die von der Wicklung (14a) des Antriebsmotors (14) beabstandet ist, und der erfassten Temperatur entsprechende Sensordaten zu generieren, wobei die Steuereinheit (17) konfiguriert ist, aus den Sensordaten des ersten Temperatursensors (20) und den Sensordaten des zweiten Temperatursensors (26) einen Wert für die Motortemperatur oder einen Motortemperaturbereich zu ermitteln.

## Beschreibung

Die Erfindung betrifft einen Rohrmotor für eine Verdunkelungseinrichtung mit den Merkmalen des Oberbegriffs von Anspruch 1. Ferner betrifft die Erfindung eine Verdunkelungseinrichtung gemäß dem Oberbegriff von Anspruch 14.

Aus dem Stand der Technik sind verschiedene Arten von Verdunkelungseinrichtungen bekannt. Unter einer Verdunkelungseinrichtung wird eine Einrichtung zum Abdecken und dadurch Verdunkeln eines Abschnitts in oder an einem Gebäude verstanden, beispielsweise zum Abdecken eines Fensters. Im Folgenden wird eine Verdunkelungseinrichtung am Beispiel einer Rollladeneinrichtung beschrieben. Grundsätzlich kann es sich dabei aber auch um eine Einrichtung mit einer Jalousie oder einer Markise handeln.

Eine Rollladeneinrichtung weist als Behang einen Rollladen bzw. Rollladenpanzer auf, der von einem Rollladenmotor angehoben oder abgesenkt werden kann. Dazu treibt der Rollladenmotor, der als Rohrmotor ausgebildet ist, eine Wickelwelle an, die zur Aufnahme, d. h. zum Aufwickeln, des Behangs dient. Der Rohrmotor, der im Innern der Wickelwelle angeordnet ist, weist eine Antriebseinheit mit einem Antriebsmotor und einer Abtriebswelle auf, die vom Antriebsmotor angetrieben wird, insbesondere über ein Getriebe, und die mit der Wickelwelle über einen Mitnehmer drehfest verbunden ist.

Eine Rollladeneinrichtung verfügt üblicherweise über eine Endlagenerkennung, die es ermöglicht, den Antriebsmotor automatisch dann abzustellen, wenn der Rollladenpanzer in seiner höchsten Position und in seiner niedrigsten Position angekommen ist. Dazu ist üblicherweise ein sogenannter Hall-Sensor benachbart zur Motorwelle angeordnet, der die Umdrehungen der Motorwelle mitzählt, während der Rollladenpanzer auf oder abgewickelt wird. In einer Steuereinrichtung sind die Endlagen anhand der Anzahl von notwendigen Umdrehungen zum Erreichen der jeweiligen Endlage einprogrammiert. Ermittelt der Hall-Sensor eine bestimmte Anzahl von Umdrehungen der Motorwelle, die eine der Endlagen repräsentiert, schaltet die Steuereinheit den Antriebsmotor automatisch ab. Außerdem verfügt ein Rollladenmotor üblicherweise über eine Hinderniserkennung mit Notabschaltung, die gewährleistet, dass der Antriebsmotor stoppt und ggfs. auch reversiert, d. h. die Drehrichtung umkehrt, sobald dieser blockiert. Grund für ein solches Blockieren kann beispielsweise ein festgefrorener Rollladenpanzer oder ein in den Bewegungsbereich des Rollladenpanzers ragendes Hindernis sein.

Die Erkennung eines Hindernisses kann beispielsweise über die Erfassung des Drehmoments (beim Aufwickelvorgang) bzw. des Bremsmoments (beim Abwickelvorgang) erfolgen. So führt ein Hindernis durch den zusätzlichen Widerstand beim Aufwickelvorgang zu einem Drehmomentanstieg und beim Abwickelvorgang zu einem Bremsmomentabfall. Eine entsprechende Änderung des Dreh- bzw. Bremsmoments wird aber üblicherweise nicht über einen Drehmomentsensor, sondern durch Erfassung einer Drehzahländerung mittels eines Hall-Sensors ermittelt. Ändert sich die Drehzahl, ist im Normalfall, d. h. bei einer Umgebungstemperatur von 20°C, davon auszugehen, dass sich das Drehmoment entsprechend geändert hat, was wiederum auf ein Hindernis hindeutet. Problematisch ist dabei allerdings, dass die Drehzahl eines Antriebsmotors auch stark abhängig von der Motortemperatur ist. Mit anderen Worten kann eine Drehzahländerung auch durch einen Temperaturanstieg der Motortemperatur bedingt sein. So kann sich ein entsprechender Antriebsmotor im Betrieb durchaus in wenigen Minuten von 20°C auf 150°C erwärmen, wodurch der Kupferwiederstand in der Wicklung entsprechend ansteigt. Dieser Effekt führt wiederum zu einer Unsicherheit bei der Hinderniserkennung, da bei einer Drehzahländerung nicht eindeutig feststeht, ob diese allein durch einen Temperaturanstieg im Antriebsmotor oder auch durch ein Hindernis hervorgerufen wurde.

Dass der Erfindung zugrundeliegende Problem besteht nun darin, den bekannten Rohrmotor derart auszugestalten und weiterzubilden, dass ein Hindernis sicher erkannt wird.

Das obige Problem wird bei einem Rohrmotor gemäß dem Oberbegriff von Anspruch 1 durch die Merkmale des kennzeichnenden Teils von Anspruch 1 gelöst.

Wesentlich ist die Erkenntnis, dass mittels zweier Temperatursensoren, die von der Wicklung des Antriebsmotors unterschiedlich weit beabstandet sind, eine grobe Abschätzung der Motortemperatur erfolgen kann. So messen die Temperatursensoren an unterschiedlichen Stellen des Rohrmotors die Temperatur, wobei eine Steuereinheit des Rohrmotors aus den beiden Temperaturwerten zumindest grob auf die Motortemperatur schließen kann. Die Steuereinheit kann dabei, wie im Weiteren noch näher erläutert wird, einen Wert oder Wertebereich für die Motortemperatur ermitteln, wobei es sich dabei um einen virtuellen Wert bzw. Wertebereich, d. h. einen Näherungswert bzw. -wertebereich handelt. Dieser muss nicht zwingend mit der tatsächlichen Motortemperatur übereinstimmen, reicht aber aus, um abschätzen zu können, ob und wie stark sich die Motortemperatur geändert hat. Insbesondere kann auf diese Weise unterschieden werden, ob eine erfasste Drehzahländerung allein durch einen Temperaturanstieg der Motortemperatur hervorgerufen wurde oder durch ein Hindernis, das einen Drehmomentanstieg bzw. Bremsmomentabfall und dadurch eine entsprechende Drehzahländerung hervorgerufen hat.

Der vorschlagsgemäße Rohrmotor weist dabei bevorzugt keinen Temperatursensor an der Wicklung des Antriebsmotors auf, dessen Sensordaten zur Ermittlung der virtuellen oder tatsächlichen Motortemperatur herangezogen bzw. verarbeitet werden (Anspruch 2). Auf diese Weise können weiterhin handelsübliche Antriebsmotoren verwendet werden. Da der Microcontroller der Steuereinheit vorzugsweise ohnehin einen eigenen Temperatursensor aufweist, der den ersten Temperatursensor des vorschlagsgemäßen Rohrmotors bildet, besteht der Zusatzaufwand bei dem vorschlagsgemäßen Rohrmotor im Wesentlichen nur in der Bereitstellung eines zweiten Temperatursensors, der von der Wicklung des Antriebsmotors, insbesondere axial, beabstandet ist. Die Kosten für einen solchen zweiten Temperatursensor sind relativ gering und stehen in keinem Verhältnis zu der Anschaffung eines Antriebsmotors mit eigenem Temperatursensor. Dadurch ist der vorschlagsgemäße Rohrmotor trotz seiner besonderen Funktionalität relativ kostengünstig.

Bei der Ausgestaltung gemäß Anspruch 3 ist der zweite Temperatursensor innerhalb eines Rohrmotorgehäuses des Rohrmotors angeordnet, das den Antriebsmotor, insbesondere radial, umgibt.

Bei der bevorzugten Ausgestaltung gemäß Anspruch 4 ist der zweite Temperatursensor außerhalb eines Antriebsgehäuses der Antriebseinheit angeordnet, das den Antriebsmotor und insbesondere ein den Antriebsmotor mit der Abtriebswelle koppelndes Getriebe, insbesondere radial, umgibt, wobei das Antriebsgehäuse insbesondere radial innerhalb des Rohrmotorgehäuses angeordnet ist.

Bei noch einer bevorzugten Ausgestaltung gemäß Anspruch 5 ist der zweite Temperatursensor in einem Abschnitt zwischen dem ersten Temperatursensor und der Wicklung des Antriebsmotors und/oder dem Antriebsgehäuse angeordnet. Der zweite Temperatursensor ermittelt dann aufgrund seines geringeren Abstands zur Wicklung eine höhere Temperatur und/oder einen höheren Temperaturanstieg als der erste Temperatursensor, der von der Wicklung weiter entfernt ist.

Der zweite Temperatursensor ist bei der Ausgestaltung gemäß Anspruch 6 benachbart, insbesondere radial benachbart, zur Motorwelle des Antriebsmotors, insbesondere zu dem zum ersten Temperatursensor weisenden Ende der Motorwelle, angeordnet. Dadurch kann der zweite Temperatursensor die Motorwellen-Temperatur erfassen. Vorzugsweise ist dabei der zweite Temperatursensor mit der Steuereinheit über ein Datenkabel verbunden, welches weiter vorzugsweise einen zur Motorwelle benachbart, insbesondere radial benachbart, angeordneten Drehzahlsensor, insbesondere Hall-Sensor, mit der Steuereinheit verbindet.

Bei dem zweiten Temperatursensor handelt es sich bei einer weiteren Ausgestaltung gemäß Anspruch 7 um einentemperaturveränderlichen Widerstand, insbesondere PTC-Widerstand (Positive Temperature Coefficient-Widerstand) oder NTC-Widerstand (Negative Temperature Coefficient-Widerstand). Ein solcher Widerstand ist in der Anschaffung besonders günstig.

Um auf besonders einfache Weise von den Sensordaten des ersten Temperatursensors und des zweiten Temperatursensors auf einen (virtuellen) Temperaturwert bzw. -wertebereich schließen zu können, weist bei der weiter bevorzugten Ausgestaltung gemäß Anspruch 8 die Steuereinheit einen Datenspeicher auf, in dem ein oder mehrere Referenz-Kennfelder hinterlegt sind. In dem oder den Referenzkennfeldern ist verschiedenen Temperaturwertepaaren aus einem Wert für eine vom ersten Temperatursensor ermittelte Temperatur und einem Wert für eine vom zweiten Temperatursensor ermittelte Temperatur jeweils ein virtueller Motortemperaturwert oder -wertebereich zugeordnet. Der virtuelle Motortemperaturwert oder -wertebereich weicht dabei insbesondere um höchstens +/- 20°C, bevorzugt um höchstens +/- 10°C, besonders bevorzugt um höchstens +/- 5°C, von dem tatsächlichen Wert für die Motortemperatur ab (Anspruch 9).

Bei der Ausgestaltung gemäß Anspruch 10 basiert die Zuordnung zwischen den verschiedenen Temperaturwertepaaren und dem jeweiligen virtuellen Motortemperaturwert oder -wertebereich auf einer vorgegebenen Umgebungstemperatur, und zwar insbesondere auf jeweils einer anderen Umgebungstemperatur. So kann vorgesehen sein, dass bei einem ersten Referenz-Kennfeld die Zuordnung auf einer ersten vorgegebenen Umgebungstemperatur basiert und bei einem zweiten Referenz-Kennfeld die Zuordnung auf einer zweiten vorgegebenen Umgebungstemperatur basiert, die höher als die erste vorgegebene Umgebungstemperatur ist, wobei vorzugsweise vorgesehen ist, dass bei einem dritten Referenz-Kennfeld die Zuordnung auf einer dritten vorgegebenen Umgebungstemperatur basiert, die niedriger als die erste vorgegebene Umgebungstemperatur ist (Anspruch 11).

Bei der bevorzugten Ausgestaltung gemäß Anspruch 12 sind in dem Datenspeicher eines oder mehrere der Referenz-Kennfelder einer ersten Wickelrichtung der Abtriebswelle und eines oder mehrere andere der Referenz-Kennfelder einer entgegengesetzten, zweiten Wickelrichtung der Abtriebswelle zugeordnet. Mit anderen Worten kann eine Gruppe von Referenz-Kennfeldern für den Aufwickelvorgang vorgesehen sein, bei dem ein Hindernis insbesondere einen Drehmomentanstieg verursacht, und eine andere Gruppe von Referenz-Kennfeldern kann für den Abwickelvorgang vorgesehen sein, bei dem ein Hindernis insbesondere einen Bremsmomentabfall verursacht.

Bei der bevorzugten Ausgestaltung gemäß Anspruch 13 ist vorgesehen, dass in dem Datenspeicher mindestens ein Kennfeld hinterlegt ist, in dem verschiedenen virtuellen Motortemperaturwerten oder -wertebereichen jeweils ein Drehzahlwert oder -wertebereich für die Drehzahl der Motorwelle zugeordnet ist. Auf diese Weise kann die Steuereinheit den jeweils ermittelten, geänderten Drehzahlwert mit dem zu diesem Zeitpunkt ermittelten virtuellen Temperaturwert oder - wertebereich vergleichen und bei einer Abweichung gegenüber der Zuordnung in dem Kennfeld auf ein Hindernis schließen.

Nach einer weiteren Lehre, der eigenständige Bedeutung zukommt, wird das obige Problem bei einer Verdunkelungseinrichtung gemäß dem Oberbegriff von Anspruch 14 durch die Merkmale des kennzeichnenden Teils von Anspruch 14 gelöst. Auf alle den vorschlagsgemäßen Rohrmotor betreffende Ausführungen darf in Zusammenhang mit dieser weiteren Lehre verwiesen werden.

Im Folgenden wird die Erfindung anhand einer lediglich ein Ausführungsbeispiel darstellenden Zeichnung näher erläutert. In der Zeichnung zeigt
- Fig. 1: eine schematische Ansicht einer vorschlagsgemäßen Verdunkelungseinrichtung,
- Fig. 2: eine geschnittene Detailansicht eines vorschlagsgemäßen Rohrmotors für die Verdunkelungseinrichtung gemäß Fig. 1 und
- Fig. 3: ein Referenz-Kennfeld einer Steuereinheit des vorschlagsgemäßen Rohrmotors gemäß Fig. 2.

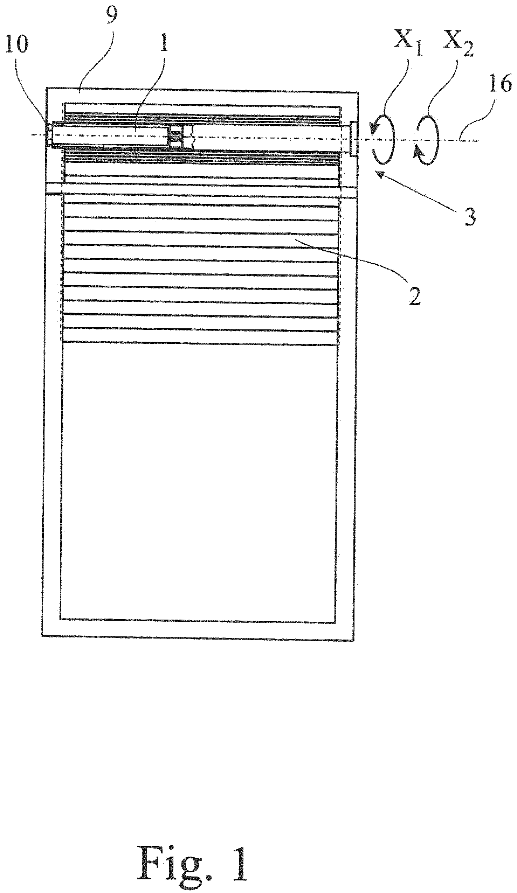

Der in der Zeichnung dargestellte Rohrmotor 1 dient hier und vorzugsweise dem motorischen Ein- und Ausfahren und/oder Anheben und Absenken eines Behangs 2, zum Beispiel eines Rollladenpanzers. Grundsätzlich ist der vorschlagsgemäße Rohrmotor 1 aber für viele Varianten von Verdunkelungseinrichtungen 3 anwendbar. Beispiele hierfür sind neben Rollläden auch Jalousien oder Markisen. Auch Sicherheitseinrichtungen wie Rolltore oder Rollvorhänge fallen in den Anwendungsbereich des vorschlagsgemäßen Rohrmotors 1. Im Folgenden wird der vorschlagsgemäße Rohrmotor 1 am Beispiel eines Rollladenmotors 1 beschrieben, der dazu dient, einen Rollladenpanzer 2 im Bereich einer Fensteröffnung auf und abzuwickeln (Fig. 1).

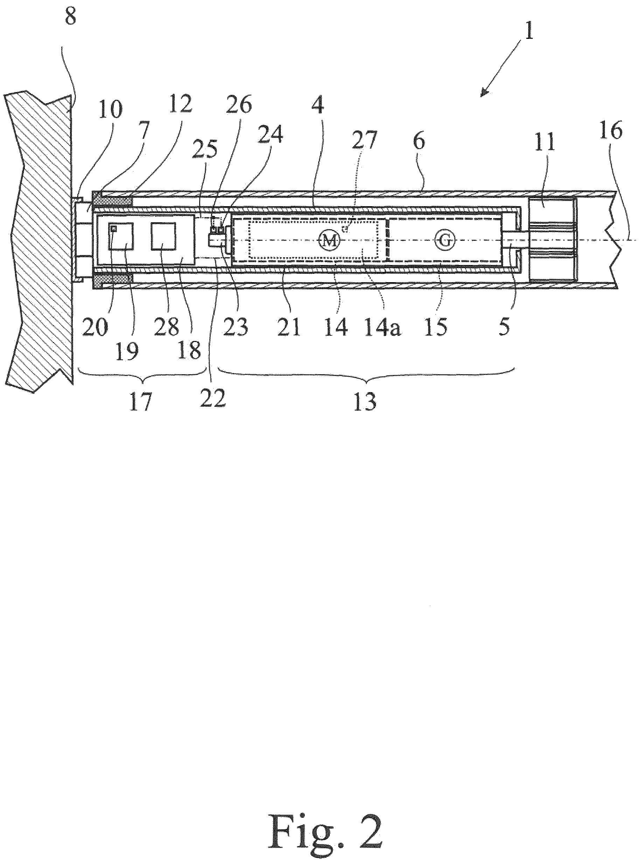

Fig. 2 zeigt den vorschlagsgemäßen Rohrmotor 1 in einer geschnittenen Detailansicht. Der Rohnnotor 1 ist mit einem Rohrmotorgehäuse 4 und einer Abtriebswelle 5 ausgestattet. Im montierten Zustand ist der Rohrmotor 1 in eine Wickelwelle 6 eingeschoben, das Rohrmotorgehäuse 4 über eine Drehmomentstütze 7 an einem mit einer Wand 8 und/oder einem Rollladenkasten 9 verbundenen Wandlager 10 festgelegt und die Abtriebswelle 5 über einen Mitnehmer 11 mit der Wickelwelle 6 gekoppelt. Die Wickelwelle 6 erstreckt sich üblicherweise über die gesamte Länge des Rohrmotors 1. Dabei ist im Bereich der Drehmomentstütze 7 vorzugsweise ein zusätzlicher Adapterring 12 vorgesehen, der auf dem Rohrmotorgehäuse 4 drehbar gelagert ist und der mit der Wickelwelle 6 in Eingriff steht. Entsprechend bildet der Adapterring 12 eine zusätzliche Lagerung für die Wickelwelle 6.

Die Wickelwelle 6 ist in ihrem Querschnitt regelmäßig als Mehrkantwelle ausgestaltet, die mit dem korrespondierend ausgestalteten Mitnehmer 11 in formschlüssigem Eingriff steht.

Im Innern des Rohrmotorgehäuses 4 ist eine Antriebseinheit 13 angeordnet, die einen eine Motorwicklung 14a aufweisenden Antriebsmotor 14 und die Abtriebswelle 5 umfasst. Der Antriebsmotor 14 überträgt über ein optional vorgesehenes Getriebe 15 der Antriebseinheit 13 bei einem Aufwickelvorgang des Behangs 2 ein Drehmoment und bei einem Abwickelvorgang des Behangs 2 ein Bremsmoment auf die Abtriebswelle 5. Die zur Aufnahme des Behangs 2 konfigurierte und drehfest mit der Abtriebswelle 5 gekoppelte Wickelwelle 6 bewegt sich im Betrieb mit der Abtriebswelle 5, die hier und vorzugsweise koaxial dazu verläuft, um eine Rotationsachse 16.

Der Rohrmotor 1 weist in seinem Rohrmotorgehäuse 4 ferner eine Steuereinheit 17 auf, die eine Steuerplatine 18 mit einem Microcontroller 19 und einem ersten, von der Wicklung 14a des Antriebsmotors 14 axial und/oder radial beabstandeten Temperatursensor 20 aufweist, der am Microcontroller 19 angeordnet ist und hier und vorzugsweise eine bauliche Einheit mit diesem bildet. Der erste Temperatursensor 20 ist konfiguriert, die Temperatur am Microcontroller 19 zu erfassen und der erfassten Temperatur entsprechende Sensordaten zu generieren, die von der Steuereinheit 17 verarbeitet werden.

Der Antriebsmotor 14, der hier zusammen mit dem Getriebe 15 in einem gemeinsamen Antriebsgehäuse 21 angeordnet ist, ist über eine Versorgungsleitung 22 mit der Steuereinheit 17 verbunden.

Am von der Abtriebswelle 5 wegweisenden Ende der Antriebseinheit 13 bzw. des Antriebsmotors 14 ist Letzterer mit einer Motorwelle 23 ausgestattet, die ebenfalls um die Rotationsachse 16 dreht. An der Motorwelle 23 ist als Drehzahlsensor 24 ein Hall-Sensor angeordnet. Der Hall-Sensor 24 erfasst Voll- oder Teilumdrehungen der Motorwelle 23 und überträgt entsprechende Sensordaten über eine Datenleitung 25 an die Steuereinheit 17, die diese Sensordaten ebenfalls verarbeitet.

Der vorschlagsgemäße Rohnnotor 1 weist ferner einen zweiten Temperatursensor 26, der hier als NTC- oder PTC-Widerstand ausgebildet ist, auf, der mit der Steuereinheit 17 hier und vorzugsweise ebenfalls über die Datenleitung 25 des Drehzahl- bzw. Hall-Sensors 24 mit der Steuereinheit 17 verbunden ist. Die Steuereinheit 17 kann auf diese Weise auch die Sensordaten des zweiten Temperatursensors 26 verarbeiten. Der zweite Temperatursensor 26 ist ebenfalls in der Lage, eine Temperatur an einer Stelle des Rohrmotors 1 zu erfassen, die von der Wicklung 14a des Antriebsmotors 14 axial und/oder radial beabstandet ist. Bevorzugt ist dabei der zweite Temperatursensor 26 weniger weit von der Wicklung 14a axial und/oder radial beabstandet als der erste Temperatursensor 20. Der zweite Temperatursensor 26 ist hier in einem Bereich innerhalb des den Rohrmotor 1 radial umgebenden Rohrmotorgehäuses 4 angeordnet, der sich zwischen der Steuereinheit 17 und der Wicklung 14a des Antriebsmotors 14 befindet. Genauer ist der zweite Temperatursensor 26 neben dem Drehzahl- bzw. Hall-Sensor 24 und radial benachbart zur Motorwelle 23 und somit in einem Abschnitt zwischen dem ersten Temperatursensor 20 und der Wicklung 14a angeordnet. Auf diese Weise kann der zweite Temperatursensor 26 die Temperatur an der Motorwelle 23 bzw. in dem Abschnitt zwischen erstem Temperatursensor 20 und der Wicklung 14a erfassen und entsprechende Sensordaten zur Verarbeitung durch die Steuereinheit 17 generieren.

Von besonderer Bedeutung ist, dass die Steuereinheit 17 aus den Sensordaten des ersten Temperatursensors 20 und den Sensordaten des zweiten Temperatursensors 26 einen Wert oder Wertebereich für die Motortemperatur ermitteln kann, der zumindest annähernd der tatsächlichen Motortemperatur entspricht. Die Steuereinheit 17 ist also in der Lage, einen virtuellen Temperatursensor 27 unmittelbar am Antriebsmotor 14 zu simulieren. Ein realer Temperatursensor braucht somit nicht am Antriebsmotor 14 vorgesehen sein.

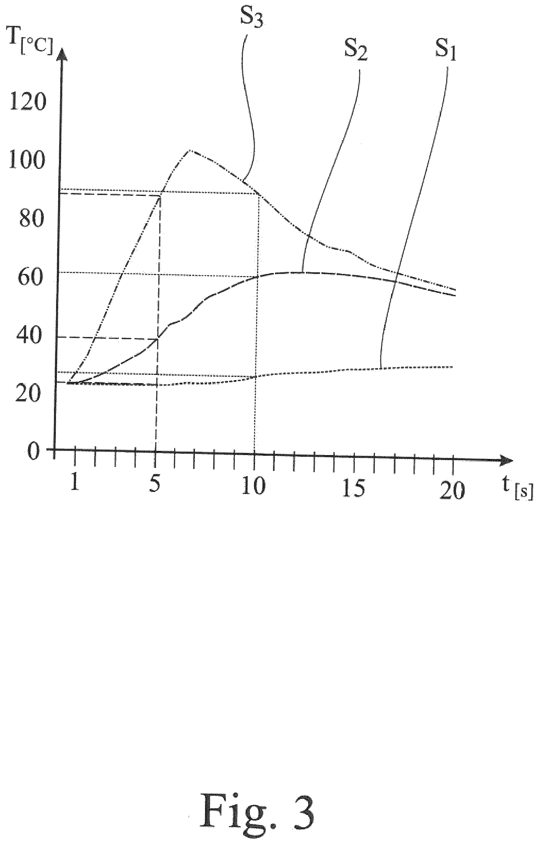

Die Steuereinheit 17 weist ferner einen Datenspeicher 28 auf, in welchem ein oder mehrere Referenz-Kennfelder (Fig. 3) hinterlegt sind. In jedem Referenz-Kennfeld ist verschiedenen Temperaturwertepaaren aus einem Wert für eine vom ersten Temperatursensor 20 ermittelte Temperatur und einem Wert für eine vom zweiten Temperatursensor 26 ermittelte Temperatur jeweils ein virtueller Motortemperaturwert oder -wertebereich zugeordnet.

In dem in Fig. 3 beispielhaft dargestellten Referenz-Kennfeld ist ein Temperaturverlauf S1, ein Temperaturverlauf S2 und ein Temperaturverlauf S3 jeweils über einen Zeitraum von 20 Sekunden dargestellt. Der Temperaturverlauf S1 wird von einer Folge von Referenz-Temperaturwerten für den ersten Temperatursensor 20 gebildet. Der Temperaturverlauf S2 wird von einer Folge von Referenz-Temperaturwerten für den zweiten Temperatursensor 26 gebildet. Der Temperaturverlauf S3 wird von einer Folge von virtuellen Motortemperaturwerten gebildet. Fig. 3 lässt erkennen, dass zu jedem Zeitpunkt während der hier beispielhaft dargestellten 20 Sekunden jedem Temperaturwertpaar aus einem Wert des Temperaturverlaufs S1 und einem Wert des Temperaturverlaufs S2 genau ein Wert des Temperaturverlaufs S3 zugeordnet ist.

Der Temperaturverlauf S1 entspricht hier dem zu erwartenden Temperaturverlauf, der vom ersten Temperatursensor 20 bei normaler Umgebungstemperatur und im Normalbetrieb, d. h. im störungsfreien Betrieb, ermittelt wird, hier beispielsweise bei einem regulären Aufwickelvorgang. Der Temperaturverlauf S2 entspricht hier dem zu erwartenden Temperaturverlauf, der während desselben Betriebs, hier desselben Aufwickelvorgangs, vom zweiten Temperatursensor 26 ermittelt wird. Durch das in dem Datenspeicher 28 hinterlegte, hier beispielhaft dargestellte Referenz-Kennfeld kann die Steuereinheit zu jedem Wertepaar von Temperaturwerten des Temperaturverlaufs S1 und des Temperaturverlaufs S2 einen korrespondierenden virtuellen Motortemperaturwert ermitteln. Beispielsweise beträgt hier nach 5 Sekunden eine im Normalbetrieb beim Aufwickelvorgang vom ersten Temperatursensor 20 ermittelte Temperatur 24°C und eine zum selben Zeitpunkt vom zweiten Temperatursensor 26 ermittelte Temperatur 40°C. Dem Wertepaar 24°C/40°C ist dann als virtueller Motortemperaturwert ein Wert von 87°C zugeordnet. Mit anderen Worten wird nach 5 Sekunden nach dem hier gezeigten Referenz-Kennfeld eine Motortemperatur von annähernd 87°C, beispielsweise eine Motortemperatur von 85°C oder 90°C zu erwarten sein. Unter denselben Bedingungen wird nach 10 Sekunden im Normalfall die vom ersten Temperatursensor 20 ermittelte Temperatur bei etwa 32° C und die vom zweiten Temperatursensor 26 ermittelte Temperatur bei 60°C liegen, wobei nach diesem Referenz-Kennfeld zu diesem Zeitpunkt der Motortemperatur ein virtueller Motortemperaturwert von etwa 87°C zugeordnet ist, was auch hier annähernd dem tatsächlichen Motortemperaturwert entspricht.

Das hier dargestellte Referenz-Kennfeld ist so genau, dass der virtuelle Motortemperaturwert um höchstens +/- 20°C, bevorzugt um höchstens +/- 10°C, besonders bevorzugt um höchstens +/- 5°C von dem tatsächlichen Wert für die Motortemperatur abweicht.

Das in Fig. 3 gezeigte Referenz-Kennfeld basiert hier beispielsweise auf einer normalen Umgebungstemperatur von 20°C. Vorzugsweise sind für andere Umgebungstemperaturen entsprechende weitere Referenz-Kennfelder vorgesehen. Auf diese Weise können bei unterschiedlichen Umgebungstemperaturen immer exakte Zuordnungen zu den Wertepaaren aus den Temperaturverläufen S1 und S2 erfolgen. Zusätzlich oder alternativ können auch unterschiedliche Referenz-Kennfelder für die unterschiedlichen Betriebsmodi "Aufwickeln" und "Abwickeln" vorgesehen sein. Im Datenspeicher 28 sind dann mit anderen Worten eines oder mehrere der Referenz-Kennfelder einer ersten Wickelrichtung X1 der Abtriebswelle 5 und eines oder mehrere der Referenz-Kennfelder einer entgegengesetzten Wickelrichtung X2 der Abtriebswelle 5 zugeordnet.

Der vorschlagsgemäße Rohrmotor 1 und die vorschlagsgemäße Verdunkelungseinrichtung 3 erlauben anhand der Referenz-Kennfelder festzustellen, ob zu einem bestimmten Zeitpunkt während des Betriebs des Rohrmotors 1 eine auftretende Drehzahländerung allein auf eine Änderung der Motortemperatur zurückzuführen ist oder aber auf eine Drehmomentänderung, was dann auf ein Hindernis hindeutet und in der Folge insbesondere zu einem Abschalten oder Reversieren des Antriebsmotors 14 führt.

Wird zu einem bestimmten Zeitpunkt von dem Drehzahl- bzw. Hall-Sensor 24 eine Veränderung der Drehzahl festgestellt, kann die Steuereinheit 17 anhand des der Situation (Umgebungstemperatur; Auf- oder Abwickelvorgang) entsprechenden Referenz-Kennfelds zunächst die Abschätzung der Motortemperatur durchführen und anhand der ermittelten (virtuellen) Motortemperatur oder eines ermittelten (virtuellen) Motortemperaturbereichs entscheiden, ob die geänderte Drehzahl der ermittelten (virtuellen) Motortemperatur bzw. dem ermittelten (virtuellen) Motortemperaturbereich entspricht. Hierzu kann die Steuereinheit beispielsweise auf ein im Datenspeicher 28 hinterlegtes weiteres Kennfeld zugreifen, in welchem bestimmten Motortemperaturen oder virtuellen Motortemperaturen bzw. -temperaturbereichen jeweils eine bestimmte Drehzahl bzw. ein bestimmter Drehzahlbereich zugeordnet ist.

Weicht nun die erfasste geänderte Drehzahl von der der ermittelten (virtuellen) Motortemperatur bzw. dem ermittelten (virtuellen) Motortemperaturbereich in dem weiteren Kennfeld zugeordneten Drehzahl ab, erkennt die Steuereinheit 17, dass dies auf ein Hindernis zurückzuführen ist, und stoppt oder reversiert den Antriebsmotor 14. Stimmt dagegen die erfasste geänderte Drehzahl mit der der ermittelten (virtuellen) Motortemperatur bzw. dem ermittelten (virtuellen) Motortemperaturbereich in dem weiteren Kennfeld zugeordneten Drehzahl überein, erkennt die Steuereinheit 17, dass es sich hierbei um eine reguläre Drehzahländerung handelt, die lediglich auf eine Temperaturänderung der Motortemperatur zurückzuführen ist, nicht aber auf ein Hindernis. Der Antriebsmotor 14 wird in letzterem Fall dann nicht gestoppt oder reversiert. Auf diese Weise lässt sich die Zuverlässigkeit einer Hinderniserkennung mit einfachen Mitteln deutlich erhöhen.

## Patentansprüche

1. Rohrmotor für eine Verdunkelungseinrichtung (3), insbesondere Rollladenmotor (1), mit einer Antriebseinheit (13) umfassend einen eine Wicklung (14a) aufweisenden Antriebsmotor (14) und eine Abtriebwelle (5), die vom Antriebsmotor (14) antreibbar ist und mit einer Steuereinheit (17) umfassend einen Microcontroller (19) und einen ersten Temperatursensor (20), der von der Wicklung (14a) des Antriebsmotors (14) beabstandet ist und der konfiguriert ist, die Temperatur am Microcontroller (19) zu erfassen und der erfassten Temperatur entsprechende Sensordaten zu generieren,
**dadurch gekennzeichnet,**
**dass** der Rohrmotor (1) ferner einen zweiten Temperatursensor (26) aufweist, der mit der Steuereinheit (17) verbunden ist und konfiguriert ist, die Temperatur an einer Stelle des Rohrmotors (1) zu erfassen, die von der Wicklung (14a) des Antriebsmotors (14) beabstandet ist, und der erfassten Temperatur entsprechende Sensordaten zu generieren, wobei die Steuereinheit (17) konfiguriert ist, aus den Sensordaten des ersten Temperatursensors (20) und den Sensordaten des zweiten Temperatursensors (26) einen Wert für die Motortemperatur oder einen Motortemperaturbereich zu ermitteln.

2. Rohrmotor nach Anspruch 1, **dadurch gekennzeichnet, dass** der Antriebsmotor (14) und/oder die Wicklung (14a) keinen Temperatursensor aufweist, der Sensordaten generiert, die die Steuereinheit (17) verarbeitet, um den Wert für die Motortemperatur oder den Motortemperaturbereich zu ermitteln.

3. Rohrmotor nach Anspruch 1 oder 2, **dadurch gekennzeichnet, dass** der zweite Temperatursensor (26) innerhalb eines Rohrmotorgehäuses (4) des Rohrmotors (1) angeordnet ist, das den Antriebsmotor (14), insbesondere radial, umgibt.

4. Rohrmotor nach einem der vorhergehenden Ansprüche, **dadurch gekennzeichnet, dass** der zweite Temperatursensor (26) außerhalb eines Antriebsgehäuses (21) der Antriebseinheit (13) angeordnet ist, das den Antriebsmotor (14) und insbesondere ein dem Antriebsmotor (14) mit der Abtriebswelle (5) koppelndes Getriebe (15), insbesondere radial, umgibt, vorzugsweise, dass das Antriebsgehäuse (21) radial innerhalb des Rohrmotorgehäuses (4) angeordnet ist.

5. Rohrmotors nach einem der vorhergehenden Ansprüche, **dadurch gekennzeichnet, dass** der zweite Temperatursensor (26) in einem Abschnitt zwischen dem ersten Temperatursensor (20) und der Wicklung (14a) des Antriebsmotors (14) und/oder dem Antriebsgehäuse (21) angeordnet ist.

6. Rohrmotor nach einem der vorhergehenden Ansprüche, **dadurch gekennzeichnet, dass** der zweite Temperatursensor (26) benachbart, insbesondere radial benachbart, zur Motorwelle (23) des Antriebsmotors (14), insbesondere zu dem zum ersten Temperatursensor (20) weisenden Ende der Motorwelle (23), angeordnet ist, vorzugsweise, dass der zweite Temperatursensor (26) mit der Steuereinheit (17) über ein Datenkabel (25) verbunden ist, weiter vorzugsweise, dass das Datenkabel (25) ferner einen zur Motorwelle (23) benachbart angeordneten Drehzahlsensor (24), insbesondere einen Hall-Sensor (24), mit der Steuereinheit (17) verbindet.

7. Rohrmotor nach einem der vorhergehenden Ansprüche, **dadurch gekennzeichnet, dass** der zweite Temperatursensor (26) ein temperaturveränderlicher Widerstand, insbesondere ein NTC- oder PTC-Widerstand, ist.

8. Rohrmotor nach einem der vorhergehenden Ansprüche, **dadurch gekennzeichnet, dass** die Steuereinheit (17) einen Datenspeicher (28) aufweist, in dem ein oder mehrere Referenz-Kennfelder hinterlegt sind, in denen verschiedenen Temperaturwertepaaren aus einem Wert für eine vom ersten Temperatursensor (20) ermittelte Temperatur und einem Wert für eine vom zweiten Temperatursensor (26) ermittelte Temperatur jeweils ein virtueller Motortemperaturwert oder -wertebereich zugeordnet ist.

9. Rohrmotor nach Anspruch 8, **dadurch gekennzeichnet, dass** der virtuelle Motortemperaturwert oder die Ober- und Untergrenze des virtuellen Motortemperaturwertebereichs um höchstens +/- 20°C, bevorzugt um höchstens +/- 10°C, besonders bevorzugt um höchstens +/- 5°C, von dem tatsächlichen Wert für die Motortemperatur abweicht.

10. Rohrmotor nach Anspruch 8 oder 9, **dadurch gekennzeichnet, dass** bei jedem Referenz-Kennfeld die Zuordnung zwischen den verschiedenen Temperaturwertepaaren und dem jeweiligen virtuellen Motortemperaturwert oder -wertebereich auf einer vorgegebenen Umgebungstemperatur basiert.

11. Rohrmotor nach Anspruch 10, **dadurch gekennzeichnet, dass** bei einem ersten Referenz-Kennfeld die Zuordnung auf einer ersten vorgegebenen Umgebungstemperatur basiert und bei einem zweiten Referenz-Kennfeld die Zuordnung auf einer zweiten vorgegebenen Umgebungstemperatur basiert, die höher als die erste vorgegebene Umgebungstemperatur ist, vorzugsweise, dass bei einem dritten Referenz-Kennfeld die Zuordnung auf einer dritten vorgegebenen Umgebungstemperatur basiert, die niedriger als die erste vorgegebene Umgebungstemperatur ist.

12. Rohrmotor nach einem der Ansprüche 8 bis 11, **dadurch gekennzeichnet, dass** in dem Datenspeicher (28) eines oder mehrere der Referenz-Kennfelder einer ersten Wickelrichtung (X1) der Abtriebswelle (5) und eines oder mehrere weitere der Referenz-Kennfelder einer der ersten Wickelrichtung (X1) entgegengesetzten Wickelrichtung (X2) der Abtriebswelle (5) zugeordnet sind.

13. Rohrmotor nach einem der vorhergehenden Ansprüche, **dadurch gekennzeichnet, dass** in dem Datenspeicher (28) mindestens ein Kennfeld hinterlegt ist, in dem verschiedenen virtuellen Motortemperaturwerten oder -wertebereichen jeweils ein Drehzahlwert oder -wertebereich für die Drehzahl der Motorwelle (23) zugeordnet ist.

14. Verdunkelungseinrichtung, insbesondere Rollladeneinrichtung (3), mit einem Behang (2), mit einem Rohrmotor (1) zum Anheben und Absenken des Behangs (2) und mit einer Wickelwelle (6), die mit einer Abtriebswelle (5) eines Antriebsmotors (14) des Rohrmotors (1) drehfest gekoppelt ist und zur Aufnahme des Behangs (2) konfiguriert ist,
**dadurch gekennzeichnet,**
**dass** der Rohrmotor (1) nach einem der vorhergehenden Ansprüche ausgebildet ist.
